# EUROPEAN PATENT APPLICATION

(11) **EP 2 784 302 A1**
(43) Date of publication of application: **01.10.2014**
(21) Application number: 11876361.4
(22) Date of filing: 21.11.2011
(51) Int. Cl.: F03D 3/04, F03D 7/06

(54) **VERTICAL-AXIS WIND TURBINE**

(71) Applicant: Peñalva Corpas, Miguel Ángel, 29620 Torremolinos (Malaga) (ES)
(72) Inventor: Peñalva Corpas, Miguel Ángel, 29620 Torremolinos (Malaga) (ES)
(74) Representative: Capitán García, Maria Nuria
(86) International application number: PCT/ES2011/070803
(87) International publication number: WO 2013/076317

(57) **Abstract**

The object of the present invention relates to a vertical axle wind turbine having a rotor with a plurality of blades surrounded by a rotating duct, the latter being formed by two cylindrical wall segments arranged in opposite quadrants, closed on the top and bottom, defining wind inflow and outflow openings. The cylindrical wall segment facing the wind encompasses an angle of less than 90°, which allows forming the wind inflow opening with greater dimensions than the wind outflow opening. On either side of the wind inflow opening are rigidly arranged a fixed deflector and an injector, and in its paracentral area a gust-control mobile deflector is placed conforming a variable wind inflow area. El gust-control mobile deflector turns about its shaft between a minimum position and a maximum position, increasing or reducing the wind inflow area.

## Description

### OBJECT OF THE INVENTION

The present invention relates to the harnessing of renewable energy, in this case wind energy. Specifically, the subject matter of the present invention is a wind turbine of the type having the rotor arranged vertically inside a duct.

### BACKGROUND OF THE INVENTION

Known in the prior art are vertical axle wind turbines, which have a rotor with a vertical axle connected to blades having a cross-section located on a plane perpendicular to the rotor axle. The wind impacts said blades and causes the rotor to turn, in turn transmitting the rotary motion to the shaft of an electric generator.

For example, patent document DE 37 34 106, published on 27 April 1989, discloses a vertical axle wind turbine comprising a rotor with at least two blades and surrounded by a vertical housing composed of two quarters of cylindrical walls at 90°. In addition, the edges of said quarters of cylindrical wall are separated 90° from each other, allowing to define between the edges of said quarters of cylindrical wall some wind inflow and outflow openings. The inventor recommends aligning the quarters of cylindrical wall against the wind.

Also known from patent document WO 2011/027014, published on 10 March 2011, is a vertical axle wind turbine comprising a rotor with a plurality of blades located inside a duct with 90° openings in its side walls for wind inflow and outflow. The duct can turn about its vertical axle to orient said openings in relation to the wind.

The drawback of these solutions is the poor functioning of the wind turbine in case of strong and instantaneous wind gusts, as it is necessary to move a substantial mass in order to turn the duct and counteract the gusts. This is a very slow operation that results in a great increase in revolutions of the rotor, causing the generator to overheat and even burn out.

On another hand, known wind turbines are pure action-reception turbomachines, that is, non-tubed machines in which the pressure at the rotor inlet and outlet does not vary. For this reason, they only make use of the kinetic energy of the wind and cannot use the pressure energy, as when the wind impacts the rotor it expands, since it is not limited by the geometry of a duct that prevents its expansion and at the same time generates an overpressure, as in the case of the present invention.

### DESCRIPTION OF THE INVENTION

The vertical axle wind turbine, according to the present invention, comprises a rotor with a plurality of blades surrounded by a rotating duct, which is formed by two cylindrical wall segments, front and rear, arranged in opposite quadrants closed on the top and bottom, defining wind inflow and outflow openings. The axle of the rotor is coupled to an electric generator.

At the wind inflow opening a wind inflow area is conformed limited by a fixed deflector and an injector.

The injector is attached on its ends to the interior of the rear segment of cylindrical wall of the rotating duct, and is also secured on the top and bottom. The injector routes the wind inside the rotating duct and limits its trajectory.

In addition, the fixed deflector is joined to the interior of the front cylindrical wall segment at its anterior end, and its rear end is arranged in the paracentral area of the wind inflow opening. The fixed deflector is also secured on the top and bottom.

To arrange the fixed deflector and the injector on both sides of the wind inflow opening, the front cylindrical wall segment, that is, the cylindrical wall segment facing the wind encompasses an angle of less than 90°, such that the wind inflow opening has greater dimensions than the wind outflow opening. The latter opening is formed by the cylindrical wall segment that encompasses 90° and is not facing the wind, and is referred to as the rear cylindrical wall segment.

Advantageously, in the paracentral area of the wind inflow opening it is possible to place a gust-control mobile deflector that turns about its axis between a minimum position and a maximum position, increasing or reducing transversally to the direction of the wind a wind inflow area.

In the preferred variant of the present invention these elements, that is, the fixed deflector, the injector and the mobile deflector for gust control are present and conform the wind inflow area by a first and a second wind inflow subareas that restrict the trajectory of the flow, generating an overpressure due to the wall effect of the rotor.

Therefore, in the wind turbine there is an increase of pressure in the wind inflow area: the pressure value in the injector is greater than the atmospheric pressure, and therefore the pressure energy is added to the kinetic energy of the wind, considerably increasing the yield of the wind turbine. The injector also increases the wind speed, and consequently the kinetic energy.

When some sensors external to the wind turbine detect a sudden increase in the wind speed, the gust-control mobile deflector will move to its minimum position, this is, the wind inflow area is minimal and limited by rear end of the gust-control mobile deflector and the injector, thus preventing undesirable effects on the generator.

In this way it is possible to counteract or control wind gusts without having to turn a duct with large dimensions and great weight.

On another hand, when the external sensors detect no sudden changes in the wind speed, the gust-control mobile deflector can reach its maximum position, that in which the wind inflow area is maximum and limited by the fixed deflector and the injector.

When the maximum position of the gust-control mobile deflector is in the optimum position, the gust-control mobile deflector can occupy intermediate positions between the minimum and maximum positions depending on the wind speed.

In another variant of the present invention, in the case of small (miniature) wind turbines with a small weight and/or dimensions, it is not necessary to have a gust-control mobile deflector in the paracentral area of the wind inflow opening. In this position the wind inflow is limited by the fixed deflector and the injector.

The low weight of these wind turbines enables a quick response to the need to rotate the rotating duct in order to reduce the wind inflow area in case of a sudden change in wind speed.

In this way, at times in which the external sensors detect that there are no sudden changes in the wind speed, the rotating duct remains facing the wind by the wind inflow opening, maximizing the wind inflow area.

Instead, when the wind turbine external sensors detect a sudden increase in wind speed, the rotating duct turns such that the front cylindrical wall segment faces the wind, thereby preventing the wind from entering the rotating duct to prevent undesirable effects on the generator.

### DESCRIPTION OF THE DRAWINGS

The present descriptive memory is completed by a set of figures that illustrate a preferred embodiment and in no way limit the invention.
Figure 1 is a schematic plan view of a horizontal cross section of the vertical axle wind turbine.
Figure 2 is a schematic plan view of a horizontal cross section of the vertical axle wind turbine with a variant of the gust-control mobile deflector of the vertical axle wind turbine of figure 1.
Figure 3 is a schematic plan view of a horizontal cross section of a variant of the vertical axle wind turbine of figure 1 without the gust-control mobile deflector.

### PREFERRED EMBODIMENT OF THE INVENTION

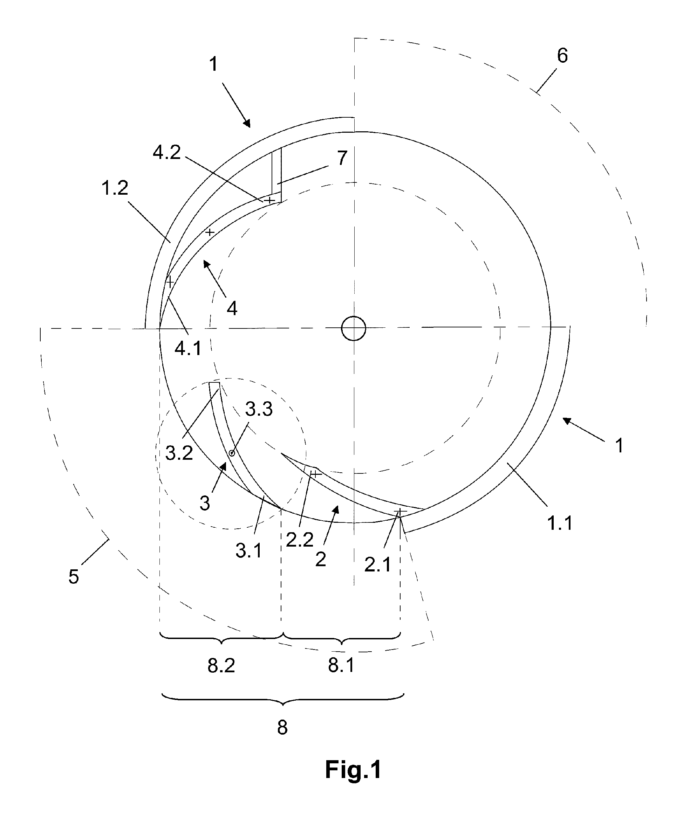

The vertical axle wind turbine represented in figure 1 comprises a rotor with a plurality of blades (not shown in the figures) and surrounded by a rotating duct (1) which comprises a segment of a front cylindrical wall (1.1) and a segment of a rear cylindrical wall (1.2) closed on the top and bottom.

The cylindrical wall segments are placed in opposite quadrants around the rotor defining a wind inflow opening (5) and a wind outflow opening (6).

The front cylindrical wall (1.1) is the part of the rotating duct (1) that faces the wind, and the rear cylindrical wall (1.2) is the part of the rotating duct (1) that is not facing the wind.

Unlike the rear cylindrical wall segment (1.2), which encompasses 90°, the front cylindrical wall segment (1.1) encompasses an angle smaller than 90°, thereby conforming the wind inflow opening (5) with greater dimensions than the opening of the wind outflow opening (6).

The above allows placing on either side of the wind inflow opening (5) a fixed deflector (2) and an injector (4) that conform, transverse to the direction of the wind, a wind inflow area (8) with smaller dimensions than the wind inflow opening (5).

In the preferred variant of the present invention, a gust-control mobile deflector (3) is arranged in the paracentral area of the wind inflow opening (5).

The gust-control mobile deflector (3), together with the deflector (2) and the injector (4), which cover the height of the rotating duct (1), conform the wind inflow area (8) with a first wind inflow subarea (8.1) and a second wind inflow subarea (8.2) where the pressure energy is generated.

The rear end (2.2) of the fixed deflector (2) is arranged in the paracentral area of the wind inflow opening (5), and in turn the anterior end (2.1) of the same is joined to the interior of the front cylindrical wall segment (1.1), specifically to its anterior edge, allowing directing the wind towards the interior of the duct (1).

On its part, the injector (4) is attached to the interior of the rear cylindrical wall segment (1.2) such that it allows directing the wind inside the rotating duct (1) and restricting its path. Its anterior end (4.1) is joined directly to the anterior edge of the rear cylindrical wall segment (1.2) by a plurality of stiffening means (7) distributed equidistantly along the entire height of the injector (4), providing stiffness to the union of the injector (4) and the rear cylindrical wall segment (1.2).

The gust-control mobile deflector (3), located in the paracentral area of the wind inflow opening (5), rotates about its axis between a minimum and a maximum position, increasing or reducing the wind inflow area (8) according to the wind speed.

The fixed deflector (2), the injector and the gust-control mobile deflector (3) form part of the rotating duct (1) and turn with it.

The anterior ends (2.1, 4.1, 3.1) of the fixed deflector (2), the injector (4) and the gust-control mobile deflector (3), when the latter is in its maximum position, are defined by a curved profile tangent to the inner circumference of the rotating duct (1).

In addition, the rear end of the fixed deflector (2.2) is defined by a curved profile tangent to the rotor.

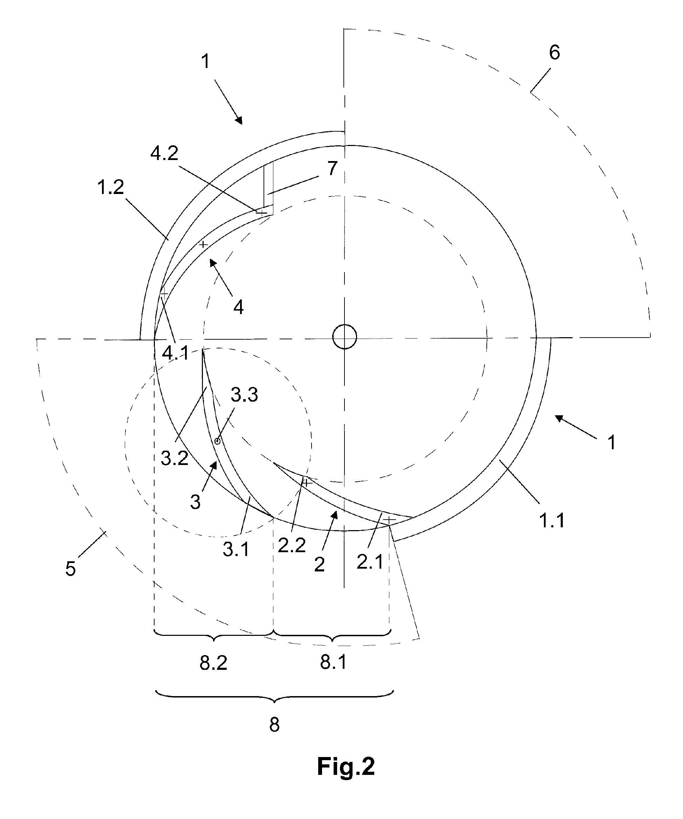

The shape of the gust-control mobile deflector (3) can vary as seen in figure 2, which represents a variant of the gust-control mobile deflector (3) with greater dimensions.

In the case of the gust-control mobile deflector (3) of figure 2, when the same is in its maximum position the rear end (3.2) is defined by a curved profile tangent to the rotor.

Figure 2 also shows the case in which this variant of a gust-control mobile deflector (3), due to its greater dimensions, has its rotation shaft shifted to ensure that the gust-control mobile deflector (3) continues to rotate in its center between a minimum position and a maximum position, increasing or reducing the wind inflow area (8).

An electric motor, not shown in the figures, drives the gust-control mobile deflector (3) between its minimum and maximum positions in response to an increase or decrease in wind speed, detected by sensors external to the wind turbine (not shown in the figures).

As shown in figures 1 and 2, while the gust-control mobile deflector (3) turns about its shaft, the first wind inflow subarea (8.1) and the second wind inflow subarea (8.2) are defined in a variable manner.

When the gust-control mobile deflector (3) is in its maximum position, the projections on the direction perpendicular to the wind direction of the first wind inflow subarea (8.1) and the second wind inflow subarea (8.2) are identical. At this time, the wind inflow area (8) is a maximum and is limited by the fixed deflector (2) and the injector (4).

This is the optimal position for the gust-control mobile deflector (3) in which the maximum yield of the wind turbine is obtained.

Although the maximum position of the gust-control mobile deflector (3) is the optimal position, the gust-control mobile deflector (3) can be at intermediate positions between the maximum and minimum positions depending on wind speed.

When the anterior end of the gust-control mobile deflector (3) contacts the fixed deflector (2), the latter has reached its minimum position. At this time the wind inflow area (8) is minimal and limited by the rear end (3.2) of the gust-control mobile deflector (3) and the injector (4).

This allow reducing the wind inflow area (8) to a minimum, which in case of a sudden wind speed increase allows preventing undesirable effects on the generator (not shown in the figures). In this way, the wind gusts can be counteracted or controlled without having to turn a duct with large dimensions and great weight.

The variant of the gust-control mobile deflector (3) shown in figure 2, as it has greater dimensions, reduces the wind inflow area (8) even further.

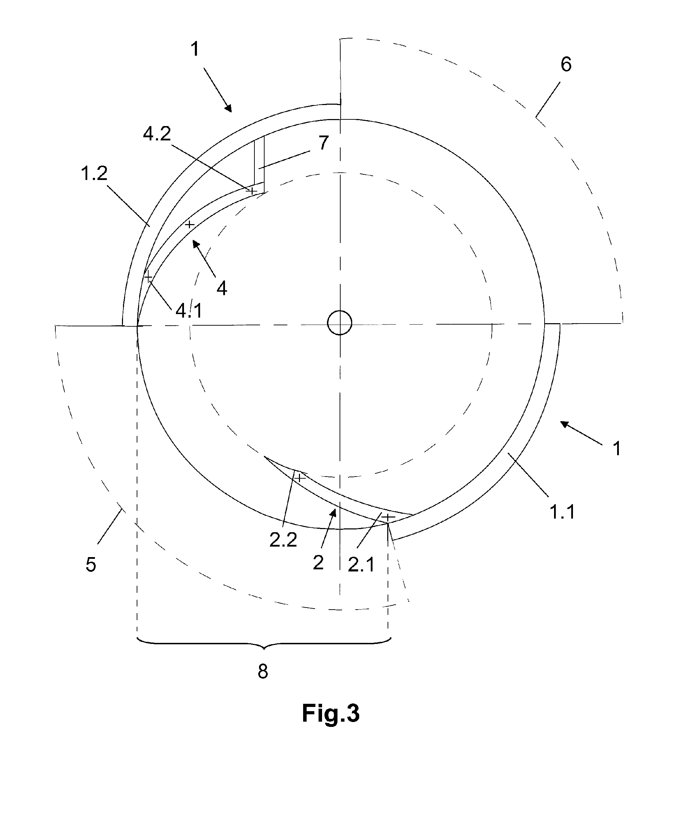

In another variant of the wind turbine of the present invention, shown in figure 3, for small wind turbines, the wind inflow area (8) can be formed only by a fixed deflector (2) and an injector (4), that is, without having a gust-control mobile deflector (3) in the paracentral area of the wind inflow opening (5) of the rotating duct (1).

Due to the low weight of such wind turbines, in these cases a fast response can be obtained for the rotation requirements of the rotating duct (1) in case of a sudden increase in wind speed.

In this way, when the external sensors detect that there are no sudden changes in the wind speed, the rotating duct (1) can remain facing the wind by the wind inflow opening (5).

In this case the wind inflow area (8), formed by the fixed deflector (2) and the injector (4), is maximum.

Instead, when the sensors external to the wind turbine detect a sudden increase in wind speed, the rotating ducts (1) turns so that its front wall segment (1.1) faces the wind, thereby preventing wind from entering and preventing undesirable effects on the generator.

## Claims

1. Vertical axle wind turbine comprising a rotor with a plurality of blades, a rotating duct (1) comprising a front cylindrical wall segment (1.1) and a rear cylindrical wall segment (1.2) that encompasses 90°, said segments (1.1, 1.2) placed in opposite quadrants around the rotor and closed on the top and on the bottom, defining a wind inflow opening (5) and a wind outflow opening (6) **characterized in that** on either side of the wind inflow opening (5) are arranged, attached on the top and bottom, a fixed deflector (2) and an injector (4) defining a wind inflow area (8), the fixed deflector (2) being connected to the interior of the front cylindrical wall segment (1.1) at its anterior end (2.1), and the injector (4) being connected to the rear cylindrical wall segment (1.2) at its anterior end (4.1) and its rear end (4.2).

2. Vertical axle wind turbine according to claim 1 wherein the fixed deflector (2) has its rear end (2.2) located in the paracentral area of the wind inflow opening (5).

3. Vertical axle wind turbine according to claim 1 wherein the rear end (4.2) of the injector (4) is joined to the rear cylindrical wall segment (1.2) by a plurality of stiffening means (7).

4. Vertical axle wind turbine according to claim 1 wherein a gust-control mobile deflector (3) is provided which turns about a shaft (3.3) between a minimum and a maximum position, in the paracentral area of the wind inflow opening (5) increasing or reducing the wind inflow area (8).

5. Vertical axle wind turbine according to previous claims wherein the gust-control mobile deflector (3), the injector (4) and the fixed deflector (2) have a curved profile.

6. Vertical axle wind turbine according to claims 4 and 5 wherein the anterior ends (2.1, 3.1, 4.1) of the fixed deflector (2), of the injector (4), and of the gust-control mobile deflector (3) when it is in its maximum position, are defined by a curved profile tangent to the inner circumference of the rotating duct (1).

7. Vertical axle wind turbine according to claims 4 and 5 wherein the rear end (3.2) of the gust-control mobile deflector (3), when it is in its maximum position, is defined by a curved profile tangent to the rotor.

8. Vertical axle wind turbine according to previous claims wherein the fixed deflector (2), the injector (4) and the gust-control mobile deflector (3) form part of the rotating duct (1), extend along its height, and turn with it.

9. Vertical axle wind turbine according to claim 1 wherein the front cylindrical wall segment (1.1) of the rotating duct (1) encompasses an angle of less than 90°.

10. Vertical axle wind turbine according to claim 4 wherein the gust-control mobile deflector (3) defines a first wind inflow subarea (8.1) and a second wind inflow subarea (8.2).

11. Vertical axle wind turbine according to claim 10 wherein the gust-control mobile deflector (3) is in its maximum position when the projections in the plane perpendicular to the direction of the wind of the first wind inflow subarea (8.1) and of the second wind inflow subarea (8.2) are identical.

12. Vertical axle wind turbine according to claim 11 wherein the wind inflow area (8) is maximum and limited by the fixed deflector (2) and the injector (4).

13. Vertical axle wind turbine according to claim 10 wherein the gust-control mobile deflector (3) is in its minimum position when its anterior end (3.1) contacts the fixed deflector (2).

14. Vertical axle wind turbine according to claim 13 wherein the wind inflow area (8) is minimum and limited by the rear end (3.2) of the gust-control mobile deflector (3) and the injector (4).

15. Vertical axle wind turbine according to claim 4 wherein el gust-control mobile deflector (3) is driven by an electric motor when some external sensors detect an increase or decrease in the wind speed.
